# EUROPEAN PATENT APPLICATION

(11) **EP 3 020 359 A1**
(43) Date of publication of application: **18.05.2016**
(21) Application number: 15193468.4
(22) Date of filing: 06.11.2015
(51) Int. Cl.: A61C 11/08

(54) **DEVICE FOR ALIGNING AND TRANSFERING DENTAL MODELS ONTO AN ARTICULATOR**

(30) Priority: 11.11.2014 IT PN20140061
(71) Applicant: Cuiuli, Alessandro, 33170 Pordenone (PN) (IT)
(72) Inventor: Cuiuli, Alessandro, 33170 Pordenone (PN) (IT)
(74) Representative: Burchielli, Riccardo

(57) **Abstract**

Device for occluding upper and lower dental jaw models having an upper and a lower plate (P1, P2) parallel to each other and a removably mounted middle plate (PC) in between. Two dental models of upper and lower jaw can be mounted on the upper and lower plate or the upper and middle plate, which plates are connected to a vertical guide system (EV1, EV2, EV3) along which the middle and the upper plate can move. The models can be aligned for propper occlusion with respect to each other and the plates with the mounted models theron can be fixed to conserve the model's relationship. The device with mounted models thereon can be transferred as a whole for simple and accurate model transfer onto an articulator.

## Description

The present invention relates to a universal dental device, since it can be applied to all known devices defined as "articulators", i.e. mechanical devices which reproduce more or less faithfully the mandibular movements outside the mouth (see Balestrini-Corrao, "Treaty Of Biomechanics Applied To The Stomatognathic Apparatus), and to a multifunctional dental device, since it performs functions of several known devices. The present invention discloses a device having two plates shaped as an equilateral triangle with rounded corners. A tag having the function of guiding and sliding vertical elements is provided on one side of the equilateral triangle or on the side opposite to the front side on which the dental arches are placed and next to said plates. Said vertical elements are joined to the plates through known means, such as linear guides, pins, hinges, bushes, locking systems, etc. Where appropriate and depending on the needs, a mobile middle horizontal plane is applied to said plates. An adjustable spacer inserted into extractable perpendicular elements helds spaced the above mentioned plates.

In case of prosthetic rehabilitation, the clinician detects the imprint of the teeth by means of dental records or using the most modern intra-oral scanners. In both cases the technician carries out plaster or resin models, which are positioned within the articulator. The top and bottom models representing the upper jaw and the lower jaw are fixed on said articulator (see Balestrini-Corrao, "Treaty of Biomechanics Applied To The Stomatognathic Apparatus). The plaster operation is performed on known devices (such as the magnetic model-holder plates) which are specific for each single articulator. In order to exactly perform the operation, known devices which are specific for each single articulator, the so-called "assembly plane" and "facial arc", are used.

The plaster phase of dental models can be performed directly within the articulator and requires the use of gypsum, water and scalpel for performing the finishing work. Therefore, in order to preserve the delicate adjustment and moving systems of said articulator, which can be damaged by the use of gypsum, water and scalpels, a known device defined as "Plaster" is used; however, said device are very expensive and impractical due to its encumbrance.

The precision requirements, as well as communication between the various production departments of the dental laboratory, require the use of a specific known device (the so-called "Registration Key of the 0-occlusal"), which allows to adjust the vertical size of a plurality of articulators belonging to the same manufacturer.

Furthermore, conventional systems for detecting and molding the dental morphology, as the so-called "verticulator", cannot be applied to the articulator, but to specific articulators which are suitably modified with specific magnetic model-holder plates.

Technological innovation, over the years, has also introduced new technologies such as the CAD modeling. Therefore, other known devices are provided for scanning the plaster models of the dental arches by maintaining a correct relationship between the positioned and the scaanner. Said instruments however requires the use of a specific set of means which can be applied only to some articulators.

These and other limitations and technical defects are found in all known odonto-prosthetic devices used according to the state of the art.

The object of the present invention is to overcome and solve the problems and defects of the state of the art and this is obtained with the device disclosed according to the invention.

The present invention is used in all operational steps relating to the execution of dental prostheses with manual technique and with CAD technique. More specifically, the device of the invention allows greater convenience in assembling the dental models within the articulator. The mobile middle horizontal plane of said device has a dual function, i.e. where appropriate it is a mounting plane in order to place the upper dental model and consequently also the lower dental model directly within the mean-value articulators. Moreover, by removing the vertical extractable elements of the device together with the related spacer, it is possible to insert the plates of the system according to the invention directly within the single-value articulators in order to lock the upper model by using the facial arc. The reduced structure of the device according to the invention allows greater convenience during the manual modeling phase. Said device is positioned within the articulator, consequently determining an accurate and repeatable vertical dimension as it were a "Registration Key of the 0-occlusal"; therefore, it is possible to set a plurality of articulators of different type at the same vertical dimension.

Furthermore, during the CAD modeling phase, the device of the invention allows to scan the dental models in a proper ratio between the positioned and the scanner and therefore the device does not need specific means, such as scanning positioners.

If necessary, it is possible to insert the mobile middle horizontal plane, together with a suitable containment plane, within the device of the invention according to a position opposed to the dental model to reproduce, in order to perform modulated stamping operations made of aesthetic or unaesthetic material.

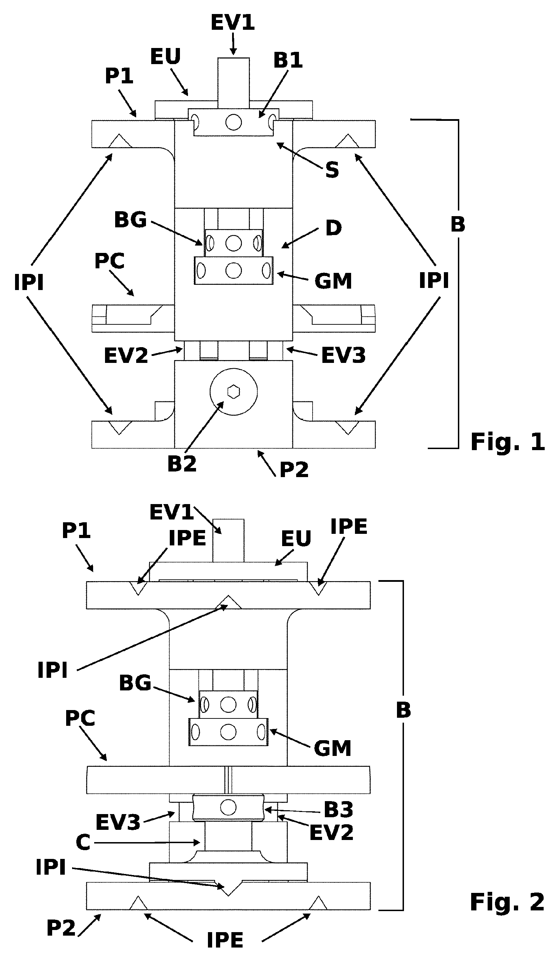

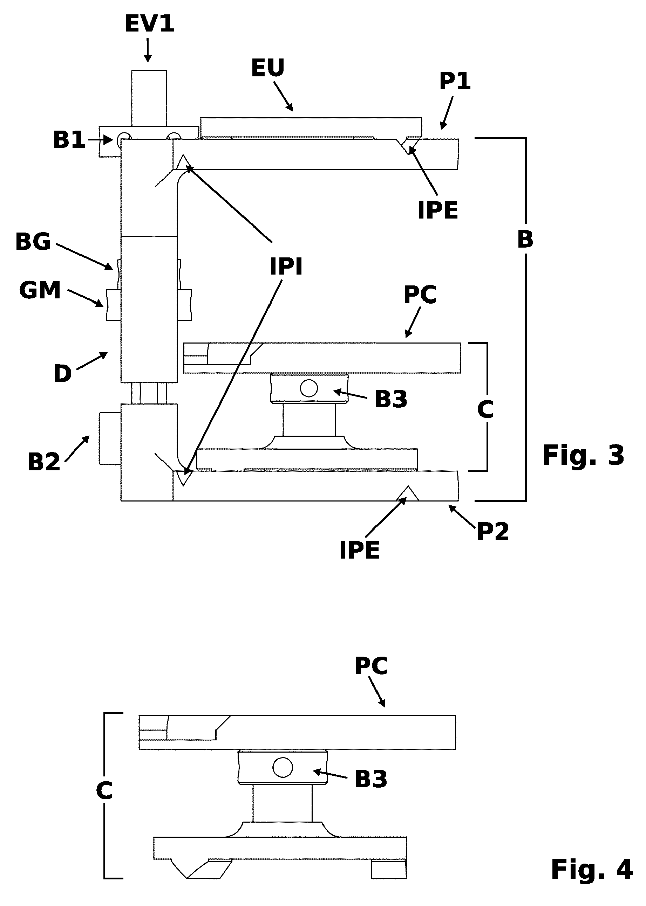

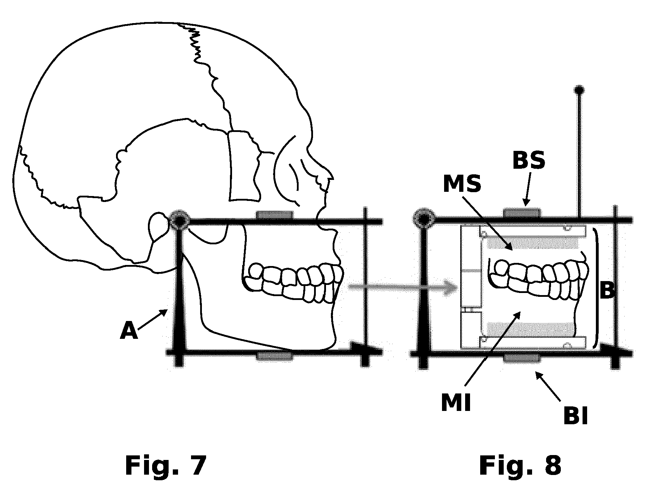

To better understand the characteristics and the use of the present invention, reference will be made to the following enclosed drawings which show the device according to a preferred embodiment:
- figure 1 is a rear view of a preferred embodiment of the device according to the invention;
- figure 2 is a front view of the preferred embodiment shown in fig. 1;
- figure 3 is a side view of the preferred embodiment shown in fig. 1 and fig. 2;
- figure 4 is a side view of the mobile middle horizontal plane of fig. 2-3;

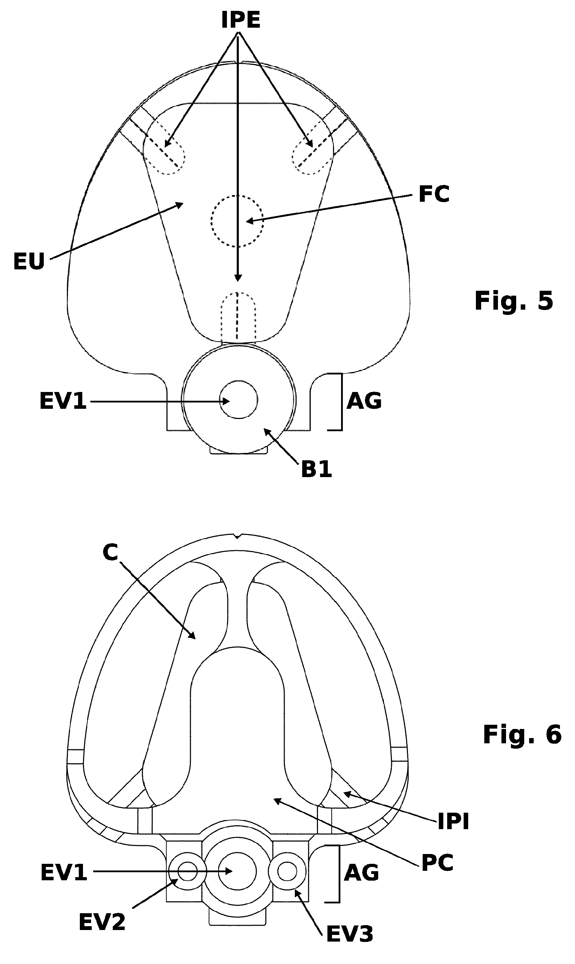

- figure 5 is a top view of the upper plate of fig. 1-2-3;
- figure 6 is a top view of the mobile middle horizontal plane which is placed on the bottom plate;
- figure 7 is a complementary view with respect to fig. 8;
- figure 8 shows the device of the present invention which is inserted within the articulator.
All the drawings have related reference numbers and/or letters.
With particular reference to figures 1, 2, 3 and 8, the device B comprises two basic elements which are constituted by an upper plate P1 and a lower plate P2, which are joined by vertical linking elements EV1, EV2, EV3 which are perpendicular to said plates P1, P2. Moreover, according to the present embodiment, said plates P1, P2 have a shape as an equilateral triangular with rounded corners with a wide radius and a tag AG having a guiding and sliding function is provided on one side of said equilateral triangle and adjacent to the plates.
A special mention must be made for some technical characteristics of the plates P1, P2, that is to say:
- the plate P1 has a form as described, as well as P2;
- the abutment element EU is placed inside the elements IPE and allows the connection of the device B with the articulator A; BS is a top removable locking element and BI is a bottom removable locking element;
- the tag AG adjacent to the plate P1 has a seat S for housing a locking element B1 which guarantees a stable and removable locking between the plate P1 and the vertical guide EV1;
- the plates P1, P2 also have internal recesses IPI which, together with a locking element FC, ensure a stable and removable connection and centering of the dental models with the plates P1-P2 and/or a stable and removable connection of the device C, and external recesses IPE on which a centering abutment EU is inserted in correspondence of the elements BS and BI, thus allowing a stable but removable insertion of the device B within the articulator A;
- the vertical elements which are perpendicular to said plates P1, P2 include a linear guide EV1, which is fixed to the plate P2 in correspondence of the tag AG next to the removable locking element B2, and centering elements EV2, EV3; a spacer D is able to slide with a motion modulated by a ring nut GM at the center of said vertical elements and the related element BG ensures a stable and removable locking of said motion;
The technical details of the plates P1, P2 set out above are all equal to each other and therefore the production costs can be lowered.
The device B allows to model the object either manually or by means of CAD techniques; moreover, there is:
- the possibility of releasing the plates P1-P2 from the vertical elements EV1, EV2, EV3 and to locate said plates within the articulator A for checking the dental modeling with the joint movements or otherwise for placing the upper dental model with facial arc;
- the possibility of inserting the device B with the dental models within a 3D scanner in a horizontal position for a better scanning operation;
- the possibility of using the device B as a key registration of the 0-occlusal, thus determining the vertical size, fixed and repeatable, of more articulators;
- the possibility of using the device B as a plasterer by taking up the mobile middle plane C, by opening the locking element B3, by fitting the mounting plane PC, by putting the element C on the plate P2, by placing the plaster model MS above the plane PC and by blocking the model MS amd the model MI with plaster; otherwise the element C is able to constitute the support for placing the facial arc;
- the plates P1 and P2, which are released by the elements EV1, EV2, EV3, and the element D also constitute the model holder for the articulator A;
- if necessary it is possible to insert the element C within the device B opposite to the dental model to be reproduced, so that said element C constitute the plane which contains the imprinting material;
- it is possible to realize the duplication of the dental morphology according to the following steps: preparing the space by means of the suitable spacer D, inserting the element C, applying suitable impressing material above the horizontal plane PC in correspondence with the morphology of the dental model, consequently moving the plate P1 against the spacer D previously adjusted so as to create a "negative" prosthetic model of the dental arch and starting from said "negative" model to produce the desired prostheses by using a ceramic or resinous material;
- the micrometric ring nut GM allows to modulate the spacer D for carrying out definite and accurate mouldings; the block BG is configured to fix the dimension.
Further advantages and improved characteristics of the invention can be clearly carried out by the man skilled in the art, as well as it is well understood that everything has been described according to a preferred embodiment as hereinafter claimed and that different variations can be made to the object of the invention without departing from what described and hereinafter claimed.

## Claims

1. A device for dental universal multifunction simplifying procedures with technical manual and / or CAD. Such a device (B) is constituted by two plates (P1 greater than P2 lower) between them parallel with recesses to accommodate IPI (C) or dental models, he said plates are suitably shaped as to almost form an equilateral triangle with rounded corners; He said plates from one side thereof contiguous preferred offer an appendage (AG) having the function of locking sliding guide. Vertical elements and centering guide EV1 EV2-EV3 with its spacer (D) duly take apart the plate from the plate P1 P2. Said plates by means of AG will join perpendicular elements by known means such as pins, hinges, locking systems, etc.. IPE grooves coupled elements will join EU in a stable but removable elements BS-BI A.

2. Device according to claim 1 **characterized in that** the plates P1-P2 feature of the centering recesses (IPE) and elements of union (EU) to obtain a stable but removable engagement within possible articulators (A).

3. Device according to the previous claims **characterized by** the plates P1 P2 which are equipped with internal notches (IPI) designed to do a centering of a stable but removable dental models in plaster MS and MI, and aimed for positioning a stable but removable horizontal plane of the intermediate Mobile (C).

4. Device according to the preceding claims, **characterized in that** the spacer (D) has a double function, one to get a movement to a decimal value in the modulation of space for the impression material, a second order to obtain a modulation of micrometric precision in the possible operations molding.

5. Device according to the preceding claims, **characterized in that** the device (C) has a double function, as a mounting plane finalized for the positioning of the upper model (MS) in plaster and the relative lower model (MI), a second like plane for containing the impression material in the operations of the mold of any prosthesis.

6. Device according to the preceding claims, **characterized in that** the elements perpendicular EV1-EV2-EV3 and spacer (D), allow to keep a certain distance the plates P1-P2, and consequently in the correct position antagonism of the dental models MS- MI with the purpose of facilitating all the different technical operations including the operations of manual modeling, CAD modeling or as a positioner for scanning.
